# EUROPEAN PATENT APPLICATION

(11) **EP 1 228 852 A1**
(43) Date of publication of application: **07.08.2002**
(21) Application number: 01130857.4
(22) Date of filing: 27.12.2001
(51) Int. Cl.: B29C 51/26, B29C 51/44

(54) **Transfer and tilter device for molded plates**

(30) Priority: 26.01.2001 IT BO010035
(71) Applicant: COMI S.r.l., I-24040 Zingonia (Bergamo) (IT)
(72) Inventor: Ballabio, Enzo, 24049 Verdellino (Bergamo) (IT)
(74) Representative: Negrini, Elena

(57) **Abstract**

Transfer and tilter device for a plate molded by at least one thermoforming station (5) for feeding with said plate (10) at least an operational station (9), includes a plurality of support means (2) each one substantially including:
- gripping means (3) of the plate (10);
- rotating means (21) fixed to the gripping means (3) for rotating these latter;
- holding means (22) of said rotating (21).

The support means (2) are associated to carriage means (11), sliding along rails (12).

## Description

The present invention relates to the thermoforming process of plates made of thermoplastic material.

Particularly the invention refers to a transfer and tilter device for molded plates, coming out from molding stations and entering operational stations.

There are known the so-called translation "pick up" devices, allowing the automatic transfer of the molded plate from the moulding station to the following operational station, for instance a cutting station.

The main drawback of the known devices consists in that they cannot automatically orient the plate in such a way to allow the following operational means working said plate. Without an opportune orientation, for instance a turnover of 180°, the conformation of the plate, which can have complex forms with more or less prominent protrusions or convexity, can in fact make impossible for the operational means to reach the plate portions to be worked. In the specific case there are a sequence of manual operations executed by operators, so slowing the production and raising the global costs.

Another drawback of the known devices consists in that they do not allow to transport the plates molded by means of a plurality of moulding stations to one or more operational stations.

The main object of the present invention is to propose a transfer and tilter device for molded plates allowing, besides the automatic transfer of the plates molded by the moulding station, their turnover in such a way to insert said plates into the following operational station with the required and necessary orientation for allowing the operational means to reach the portions to be worked.

Other object is to propose a flexible device fit to withdraw the plates molded by a plurality of moulding stations and to transport the plates with the correct orientation to a plurality of operational stations.

Further object is to propose an adjustable device fit for manipulating plates having different dimensions and shapes.

The above mentioned object are achieved according to the content of the claims. The characteristics of the present invention are underlined in the following with particular reference to the attach drawing tables, in which:
- figure 1 shows a front view of the device object of the present invention, in which some elements have been removed for better showing other ones;
- figure 2 shows a side view of the figure 1 device, shown in two operational positions;
- figure 3 shows a reduced side view of the device object of the present invention, inserted in a plate thermoforming line, in which some elements have been removed for better showing other ones;
- figure 4 shows an enlarged front view of the figure 3 device, in which some elements have been removed for better showing other ones;
- figure 5 shows a plant view of a thermoforming line having several moulding and operational stations.

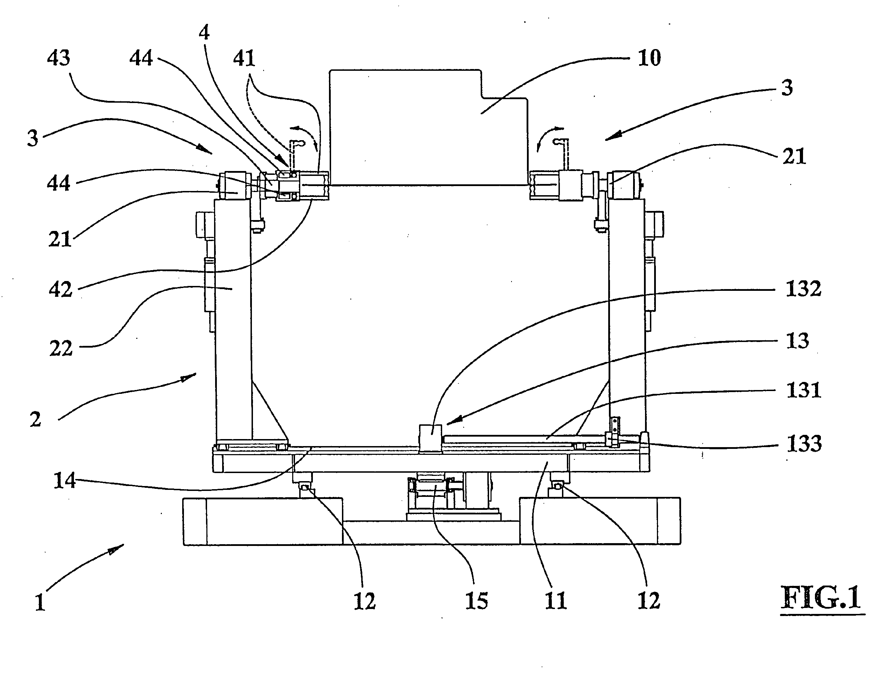

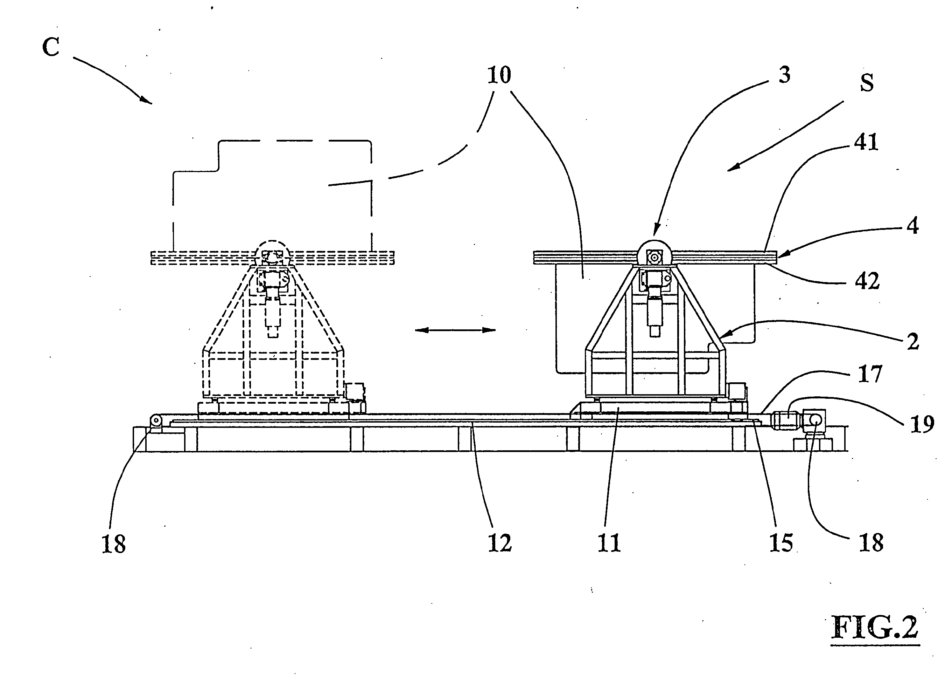

With reference to figures 1 and 2, the transfer and tilter device 1 includes at least a support mean 2, constituted substantially by gripping means 3 of the plate 10, integrally connected to rotating means 21, fixed to holding means 22. The gripping means 3 substantially consist of pliers means 4, having two opposed elongated jaws 41 and 42 and hinged on a shaft 43 of the rotating means 21, which rotates said jaws. Such opposed jaws 41, 42 are operated separately and independently by respective pneumatic actuators 44, and they both may rotate of 90 degrees at least in opening and closing position.

The support mean 2 is fixed to the carriage 11 by means of sliding guides 14 and adjustment means 13, and it is longitudinally moved along rails 12 by translating means 15, generally constituted by a positive drive belt or a chain 17 connected to the carriage 11 and engaged to pulleys 18, one of which is rotated by an electric motor 19.

The adjustment means 13 define the transversal position of the support mean 2 and are generally constituted by a screw-nut screw system in which an electric motor 132 rotates driving means 131, for instance a screw, moving the respective nut screw 133, fixed to the holding mean 22.

When the support means 2 are two and opposed, the adjustment means 13 further include known mechanisms or kinematic motion that allow the synchronous and opposed translation of the support means 2 in opening and closing position. Furthermore the rotating means 21 are opposed and aligned and they provide the synchronous rotation of the respective gripping means 3.

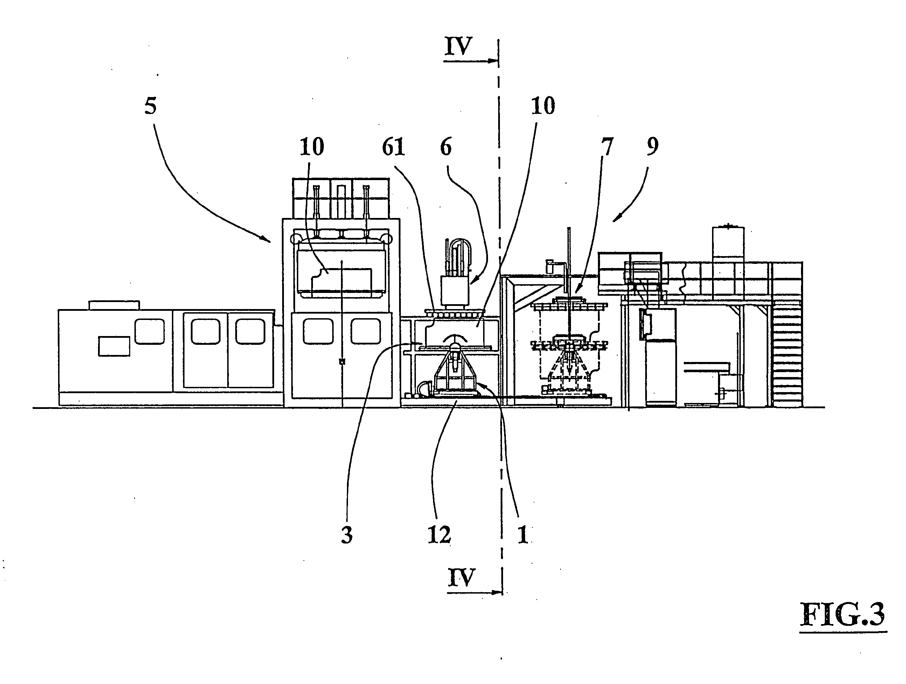

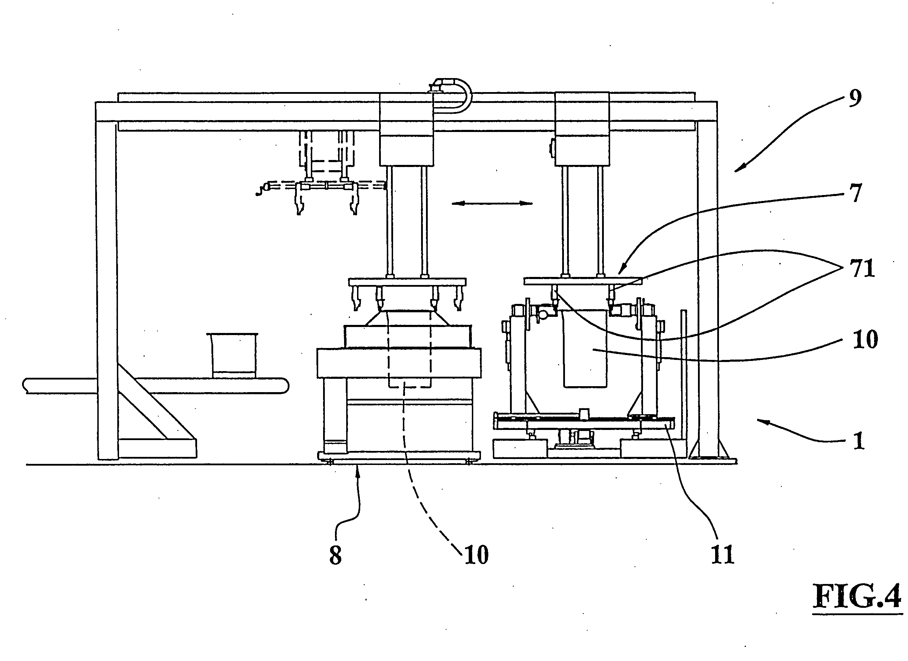

The figures 3 and 4 show a first grasping mean 6 for grasping the molded plate 10 from the moulding station 5 and for transferring said plate to the device 1 and a second grasping mean 7 for grasping the plate 10 from the device 1 and for matching this latter against a transfer mean 8 of one or more operational stations 9.

The grasping means, first 6 and second 7, so-called pick-up, for instance consist of an arm with pneumatic suction cups 61 or grabbing means with jaws 71 for grabbing and releasing the molded plate 10. The vertical and horizontal translation movements of the arm are made by means of related movement linear actuators, not shown in the attached figures.

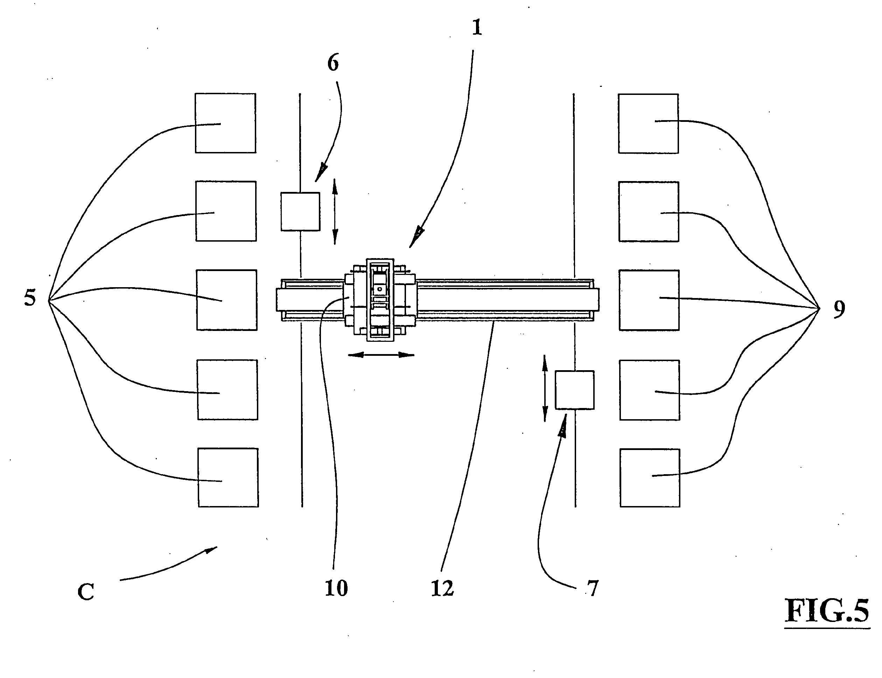

With reference to figure 5, the operation of the device provides that the first grasping mean 6 grasps, in correspondence of a loading condition C, a plate 10 molded by a plurality of moulding stations 5 and positions said plate 10 on the plier means 4 of the device 1, predisposed in opening position, in which a jaw is rotated in vertical position, the other one being in horizontal position to support said plate.

After closing the grip on the molded plate 10, the device 1 transfers said plate to one of a plurality of operational stations 9, in correspondence of an unloading condition S.

Before releasing the plate, if necessary, the device 1 turns over around a transversal axis the plate 10, by rotating the gripping means 3, in such a way to reverse upside down, for instance, the position of the convex side of the plate or viceversa. The rotation of the rotating means 21 or the turnover can have any excursion, preferably of 180°.

During the release of the plate also the plier means 4 rotates a jaw in vertical position and the other one in horizontal position in order to support said plate.

A second grasping mean 7 grasps the plate 10 from the device 1 and matches said plate against a transfer mean 8 of the related operational station 9, for instance a cutting station.

The main advantage of the present invention is to provide a transfer and tilter device for molded plates allowing, the automatic transfer of the plates molded by the moulding station, their turnover in such a way to insert said plates into the following operational station with the required orientation.

Other advantage is to provide a flexible transfer and tilter device, fir for grasping the plates molded by one or more moulding stations and for transporting and correctly orientating said plates to one or more following operational stations.

Further advantage is to provide an adjustable device fit for transferring and turning over plates having different dimensions and shapes.

## Claims

1. Transfer and tilter device for a molded plate (10) by at least a thermoforming station (5) for feeding with said plate (10) at least an operational station (9), said device (1) being **characterized in that** includes a plurality of support means (2) each one substantially including:
- gripping means (3) of the plate (10);
- rotating means (21) fixed to the gripping means (3) for the rotation of these latter and the orientation of the plate (10);
- holding means (22) of said rotating means (21);
said support means (2) being associated to carriage means (11), these latter being alternatively sliding along rails (12) between a loading condition C and an unloading condition S.

2. Device according to claim 1 **characterized in that** the support means (2) are two, one of which at least is slidingly associated to the carriage means (11) and connected to adjustment means (13) of the mutual distance between the support means (2) according to the dimensions of the plate (10).

3. Device according to anyone of the preceding claims **characterized in that** the gripping means (3) substantially consist of plier means (4) with jaws, first (41) and second (42).

4. Device according to claim 3 **characterized in that** the jaws, first (41) and second (42), have an elongated shape, are hinged to the rotating means (21) and are separately and independently operated by respective pneumatic actuators (44).

5. Device according to any of the preceding claims **characterized in that** the rotating means (21) rotate the gripping means (3) around a transversal axis.

6. Device according to claim 2 **characterized in that** the adjustment means (13) include , sliding guides (14) on which the support means (2) slide and driving means (131) operated by a motor (132) for the motion of said support means (2).

7. Device according to any of the preceding claims **characterized in that** the carriage means (11) are longitudinally moved along the rails (12) by translating means (15).

8. Device according to claim 7 **characterized in that** the translating means (15) are substantially constituted by a positive drive belt or chain (17) fixed to the carriage means (11) and engaged to pulleys (18), at least one of which is operated by a motor (19).

9. Device according to claim 1 **characterized in that** the rotation of the rotating means (21) may have any excursion, preferably of 180°.

10. Device according to any of the preceding claims **characterized in that** further includes a first grasping mean (6) fit for grasping the plate (10) coming out from at least one thermoforming station (5) and for transferring said plate to the gripping means (3).

11. Device according to any of the preceding claims **characterized in that** further includes a second grasping mean (7) for grasping the plate (10) from the gripping means (3) and for matching the plate against a transfer mean (8) of at least an operational station (9).

12. Device according to claims 10 and 11 **characterized in that** the grasping means, first (6) and according to (7), include sucker cup means (61) or plier means (71) for grasping the plate (3).

13. Device according to any of the preceding claims **characterized in that** the driving of the grabbing means, the grasping means, first (6) and second (7), the rotating means (21), the actuators (44) and the motors (19, 132) is controlled by digital control means.
